# DEMANDE DE BREVET EUROPEEN

(11) **EP 2 620 187 A1**
(43) Date de publication de la demande: **31.07.2013**
(21) Numéro de dépôt: 13354002.1
(22) Date de dépôt: 22.01.2013
(51) Int. Cl.: A63B 69/36, G09B 19/00, A63B 24/00

(54) **Procédé de perfectionnement de la posture et de la gestuelle du golfeur et dispositif de perfectionnement**

(30) Priorité: 30.01.2012 FR 1200268
(71) Demandeur: Andres, Richard, 26200 Montélimar (FR)
(72) Inventeur: Andres, Richard, 26200 Montélimar (FR)
(74) Mandataire: Talbot, Alexandre

(57) **Abrégé**

Le dispositif de perfectionnement de la posture et/ou de la gestuelle du golfeur comporte une platine (1) destinée à reposer sur le sol. La platine (1) comporte un premier indicateur (2) représentatif de la position d'une balle de golf. Un deuxième indicateur (3) est agencé de manière à indiquer une première direction (XX) souhaitée de déplacement de la balle de golf. Un troisième indicateur (4) est configuré de manière à définir une deuxième direction (YY) perpendiculaire à la première direction (XX). Le troisième indicateur (4) est configuré pour s'aligner avec l'axe longitudinal d'un club de golf tenu par le golfeur. Un quatrième indicateur (5) est configuré de manière à définir une troisième direction (ZZ) sensiblement perpendiculaire à la deuxième direction (YY) et perpendiculaire à la première direction (XX). Le quatrième indicateur (5) est configuré pour s'aligner avec la colonne vertébrale du golfeur.

## Description

### Domaine technique de l'invention

L'invention est relative à un procédé de perfectionnement de la posture et/ou de la gestuelle du golfeur.

L'invention est également relative à un dispositif de perfectionnement de la posture et/ou de la gestuelle du golfeur.

### État de la technique

Comme tout sportif, le golfeur est confronté à des situations diverses qu'il doit analyser afin de prévoir une réponse adaptée au terrain et aux conditions climatiques et ainsi maximiser ses chances de réussite. Tout au long d'un parcours de golf ou lors d'une séance d'entraînement, le golfeur cherche à envoyer la balle dans une zone cible qui se situe à des distances variables et il est confronté à des conditions topographiques ou climatiques variables.

Le golfeur a en sa possession une pluralité de clubs de golf qui sont définis par des caractéristiques spécifiques. Chaque club de golf est unique et il répond à des exigences précises. La morphologie de la tête du club est une caractéristique qui évolue entre les différents clubs ce qui se traduit par une modification de la trajectoire de la balle. D'autres caractéristiques évoluent également entre les différents clubs de golf, par exemple, la taille du club, le poids du club et la répartition de ce poids. De cette manière, le golfeur est en mesure de faire face à des situations plus variées que s'il ne possédait qu'un seul club de golf.

Cependant, afin de déplacer la balle depuis son point de départ vers une zone d'atterrissage recherchée, le golfeur doit effectuer un mouvement particulier de son corps, le swing, afin que le club de golf frappe la balle et envoie cette dernière dans la zone désirée, la cible. Le swing est défini par une rotation du bassin du golfeur associée à une rotation des épaules. Ces deux rotations interviennent majoritairement dans la trajectoire du club de golf avant que ce dernier ne vienne toucher la balle.

On constate aisément que la gestuelle du golfeur intervient au premier ordre pour définir la trajectoire de la balle. Avant de travailler sa gestuelle, le joueur doit optimiser sa posture, c'est-à-dire sa position et l'inclinaison de son corps et du club de golf par rapport à la balle et à la zone cible recherchée. Le golfeur doit notamment adapter sa gestuelle à la topographie du parcours, aux conditions climatiques et au club de golf utilisé.

### Objet de l'invention

On constate qu'il existe un besoin de prévoir un dispositif de perfectionnement de la posture et/ou de la gestuelle du golfeur qui soit facile à utiliser sur les différentes zones de pratique du golfeur.

On tend à résoudre ce besoin au moyen d'un dispositif de fonctionnement comportant une platine (1) destinée à reposer sur le sol, la platine comprenant :
- un premier indicateur représentatif de la position d'une balle de golf,
- un deuxième indicateur agencé de manière à indiquer une première direction souhaitée de déplacement de la balle de golf,
- un troisième indicateur configuré de manière à définir une deuxième direction sensiblement perpendiculaire à la première direction, le troisième indicateur étant configuré pour définir un plan de swing à l'intérieur duquel le club de golf devrait se déplacer lors de la frappe de la balle de golf,
- un quatrième indicateur (5) configuré de manière à définir une troisième direction (ZZ) sensiblement perpendiculaire à la deuxième direction (YY) et perpendiculaire à la première direction (XX), le quatrième indicateur (5) étant configuré pour s'aligner avec l'axe de la colonne vertébrale du golfeur.

On constate encore qu'il existe un besoin de prévoir un procédé de perfectionnement de la posture et/ou de la gestuelle du golfeur qui soit pratique à mettre en oeuvre, qui puisse être appliqué dans des conditions d'utilisation variées et qui s'adapte à la morphologie du joueur.

On tend à résoudre ce besoin au moyen d'un procédé qui comporte les étapes suivantes :
- placer un dispositif sur le sol,
- orienter la première direction définie au moyen du deuxième indicateur de la platine en direction de la zone cible,
- placer le joueur par rapport à la platine au moyen du premier indicateur de sorte que la tête d'un club de golf soit au niveau du premier indicateur lorsque le joueur est en position de frappe,
- aligner le troisième indicateur avec la direction formée par l'axe longitudinal du club de golf, le troisième indicateur définissant une troisième direction passant par les mains du golfeur et le premier indicateur,
- placer le quatrième indicateur de manière à définir une quatrième direction représentative de la direction de la colonne vertébrale du joueur.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, un dispositif de perfectionnement en vue de dessus,
- la figure 2 représente, de manière schématique, un dispositif de perfectionnement en vue de côté,
- la figure 3 représente, de manière schématique, un dispositif de comparaison de l'angle d'inclinaison d'un indicateur du dispositif de perfectionnement,
- les figures 4a et 4b représentent, de manière schématique, un dispositif de comparaison de l'écart angulaire existant entre deux indicateurs du dispositif de perfectionnement,
- la figure 5 représente, de manière schématique, un dispositif de perfectionnement en vue de dessus avec des bras de stabilisation.

### Description d'un mode de réalisation préférentiel de l'invention

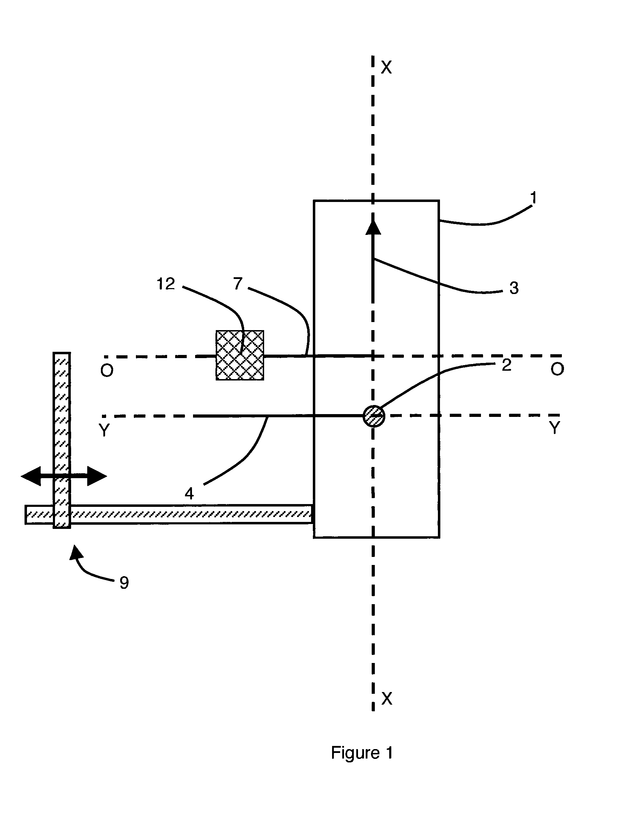

Comme illustré à la figure 1, le dispositif de perfectionnement de la posture et/ou de la gestuelle du golfeur comporte une platine 1 qui est destinée à être posée sur le sol.

La platine 1 comporte un premier indicateur 2 représentatif de la position de la balle à jouer. Ce premier indicateur 2 peut être matérialisé par une balle réelle solidaire ou non de la platine 1. Le premier indicateur 2 peut être matérialisé par un autre élément de la platine 1 de manière à faciliter le positionnement du joueur par rapport aux différents guides et indicateurs du dispositif de perfectionnement. Le premier indicateur 2 représente la zone de frappe de la balle lors du positionnement du joueur par rapport au dispositif.

La platine 1 comporte un deuxième indicateur 3. Le deuxième indicateur 3 est agencé de manière à indiquer une première direction souhaitée pour le déplacement de la balle de golf. Le deuxième indicateur 3 est donc un élément qui définit une première direction particulière et cette première direction est orientée vers l'objectif à atteindre à partir de la zone de frappe 2. Cette première direction est également appelée ligne d'objectif de jeu et elle est illustrée par l'axe XX sur la figure 1. Ce deuxième indicateur 3 permet d'orienter le dispositif sur le terrain de manière à ce que le joueur oriente naturellement sa posture de jeu vers la zone à atteindre lorsqu'il se place par rapport à la platine.

L'axe XX passe par la zone de frappe 2 ou à côté de la zone de frappe afin de faciliter le positionnement de la platine 1 ou de faciliter le positionnement du joueur par rapport à la platine 1. Le léger décalage qui peut exister entre la zone de frappe 2 et l'axe XX de la platine 1 est sans incidence sur le positionnement du joueur car la zone cible est très éloignée de la platine 1 en comparaison de la distance qui sépare l'axe XX de la zone de frappe 2. Le décalage angulaire qui peut exister est alors négligeable devant les capacités du joueur pour se placer parfaitement dans la direction optimale.

De manière générale, le deuxième indicateur 3 peut définir une direction ou un plan. Le plan contient la première direction XX. Le plan est perpendiculaire au sol ou sensiblement perpendiculaire et il est orienté en direction de la zone cible, c'est-à-dire qu'il contient l'axe reliant la zone cible au deuxième indicateur 3.

Le deuxième indicateur 3 est avantageusement solidaire de la platine 1 afin de faciliter l'orientation de la platine 1 et des autres éléments du dispositif de perfectionnement par rapport aux différents plans et aux différentes directions qui définissent la posture et le swing d'un golfeur. Cependant, il est également envisageable d'avoir un deuxième indicateur 3 qui peut être démonté afin de réduire la surface d'appui sur le sol et ainsi améliorer la stabilité de la platine sur une surface ayant du relief. Le deuxième indicateur 3 peut encore avoir une partie fixe et une partie mobile, la partie mobile permettant un meilleur alignement qu'avec la partie fixe.

Le deuxième indicateur 3 peut être formé par un méplat sur la face externe de la platine 1, la face plate du méplat est avantageusement configurée pour être perpendiculaire au sol ou sensiblement perpendiculaire au sol. Ainsi, l'axe sensiblement parallèle au sol et contenu dans la face du méplat définit la première direction XX, la ligne de jeu. Le deuxième indicateur 3 peut également être formé par une tige qui est préférentiellement à longueur variable et qui définit la première direction XX, par une rainure formée sur la surface externe de la platine 1, par un indicateur de couleur ou par un dispositif de génération d'un rayonnement lumineux focalisé, par exemple de type laser. De manière générale, le deuxième indicateur 3 peut être formé par tout dispositif ou tout moyen apte à définir la direction XX ou le plan contenant la direction XX pour le golfeur se trouvant face au dispositif. Cette direction peut être définie uniquement par le deuxième indicateur 3 ou au moyen de l'intersection entre le plan défini par le deuxième indicateur 3 et le plan défini par le sol. Dans certains modes de réalisation, le deuxième indicateur 3 peut être légèrement décalé de l'axe XX afin de faciliter l'orientation du dispositif.

Le dispositif comporte également un troisième indicateur 4 qui est configuré de manière à définir une deuxième direction illustrée par l'axe YY sur la figure 1. La deuxième direction YY est perpendiculaire ou sensiblement perpendiculaire à la première direction XX, c'est-à-dire que le vecteur représentatif de la première direction est perpendiculaire au vecteur représentatif de la deuxième direction. Le troisième indicateur 4 définit également un premier plan. Le premier plan contient la deuxième direction YY et le vecteur représentatif de la première direction XX, de manière préférentielle les première et deuxième directions XX et YY. Afin d'améliorer la posture du joueur par rapport à la balle et à la zone cible, le troisième indicateur 4 est représentatif du «lie» du club de golf, c'est-à-dire de l'inclinaison du club de golf. Le troisième indicateur 4 est configuré pour s'aligner avec l'axe longitudinal d'un club de golf tenu par le golfeur.

Dans un mode de réalisation particulier, le troisième indicateur 4 est formé par un guide ou une tige monté à rotation sur la platine 1. Le troisième indicateur 4 est avantageusement monté à rotation selon la première direction XX, c'est-à-dire que l'axe de rotation du troisième indicateur est confondu avec la direction XX. Ainsi, le troisième indicateur 4 est configuré pour avoir une rotation autour d'un axe représenté par la première direction XX et passant par le premier indicateur 2 de position de balle. La deuxième direction YY coupe la première direction XX. Dans un mode de réalisation particulier, le guide est télescopique afin de s'adapter à la configuration du terrain et à la morphologie de l'utilisateur. Le troisième indicateur 4 est configuré de manière à pouvoir s'aligner avec l'axe longitudinal d'un club de golf tenu par le joueur. L'axe longitudinal du club relie la tête du club à la zone de prise en main du club.

Le dispositif de perfectionnement comporte un quatrième indicateur 5 configuré pour définir une troisième direction ZZ et/ou un plan sensiblement perpendiculaire à la deuxième direction YY définie par le troisième indicateur 4. Par sensiblement perpendiculaire, on entend que la deuxième direction YY traverse le plan selon un angle avantageusement compris entre 85° et 105° de manière encore plus préférentielle entre 93° et 103° et encore plus avantageusement égale à 98°. L'angle est mesuré dans le plan qui contient le troisième indicateur 4 et le quatrième indicateur 5 Le deuxième plan est orienté selon la ligne de jeu, c'est-à-dire qu'il contient le vecteur représentatif de l'axe XX.

Comme tous les individus ne sont pas en mesure de coordonner les rotations des épaules et du bassin de la même manière, le quatrième indicateur 5 présente une plage de tolérance autour de l'angle droit afin que le joueur puisse trouver sa propre position optimale en fonction de ces capacités physiques. De manière avantageuse, le dispositif de perfectionnement comporte un système de mesure de l'angle entre le troisième indicateur 4 et le quatrième indicateur 5 afin que le joueur connaisse son angulation optimale et qu'il soit en mesure de reproduire cet angle d'une séance sur l'autre. Cela permet également de confronter sa position en fonction du type de club de golf utilisé.

Le quatrième indicateur 5 est configuré pour être représentatif de la position de la colonne vertébrale du joueur ce qui est représentatif du buste du golfeur et plus avantageusement du dos du golfeur. Le quatrième indicateur 5 est avantageusement configuré pour s'aligner avec l'axe de la colonne vertébrale du golfeur et la direction ZZ ainsi définie est perpendiculaire à la première direction XX.

De cette manière, le quatrième indicateur 5 permet de contrôler la position des épaules et leur rotation. Le quatrième indicateur peut se déplacer de manière à être en contact avec le buste ou le dos du joueur ou pour être à proximité immédiate du haut du corps du joueur. Ce positionnement des épaules par rapport au club de golf, au reste du corps et à la zone cible permet d'avoir une association accrue de l'énergie développée par la rotation du bassin et de l'énergie développée par la rotation des épaules.

Dans un mode de réalisation particulier, le quatrième indicateur 5 est monté mobile en rotation sur le troisième indicateur 4 de manière à autoriser une déviation angulaire dans la gamme définie plus haut. Dans un mode de réalisation encore plus préférentiel, le quatrième indicateur 5 est monté mobile en rotation de manière à pouvoir se trouver orienté dans la deuxième direction YY et ainsi faciliter le rangement des troisième et quatrième indicateurs. Le quatrième indicateur 5 se trouve alors confondu avec le troisième indicateur 4. Le quatrième indicateur 5 peut également être monté mobile en rotation selon l'axe YY afin de faciliter le positionnement du guide sur la colonne vertébrale du joueur, sur le buste du joueur ou dans le dos du joueur.

Dans cette configuration, le dispositif permet au joueur de golf de confronter sa position par rapport à des directions et des plans définis et/ou se placer dans une posture optimale après avoir aligné le dispositif par rapport à l'objectif visé. Comme le quatrième indicateur 5 est placé par rapport au troisième indicateur 4, le dispositif prend en compte les changements de club de golf et les différentes morphologies de joueurs. Les différentes directions liées à la posture du joueur sont définies par rapport à la ligne d'objectif de jeu ce qui permet au joueur de se placer directement par rapport au dispositif se trouvant devant lui et non par rapport à l'objectif qui est plus éloigné.

Le quatrième indicateur 5 est associé au troisième indicateur 4 de manière à définir une posture permettant d'avoir un placement optimal du joueur notamment par rapport au terrain sur lequel se trouve le joueur, par rapport à la morphologie du joueur et par rapport au type de club utilisé. Le joueur se positionne devant la platine 1 dans sa posture de jeu de manière à ce que le club de golf soit en mesure de frapper l'indicateur de position de balle 2. Le joueur s'étant préalablement orienté de manière à suivre la même ligne de jeu que celle définie pour la platine 1.

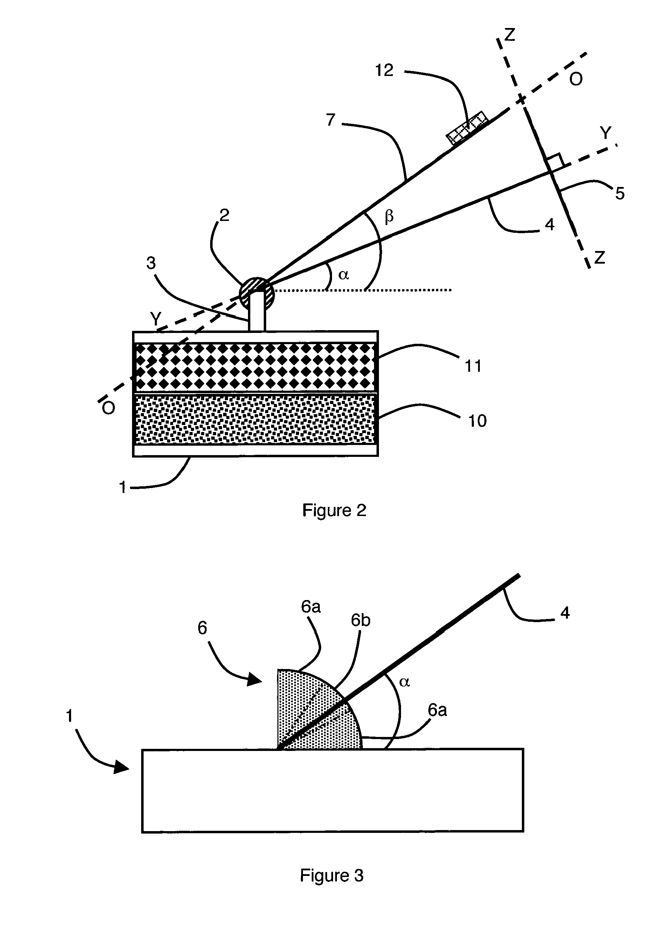

Dans un mode de réalisation avantageux illustré à la figure 3 et qui peut être combiné avec les modes de réalisation précédents, le troisième indicateur 4 est associé à un dispositif de mesure 6 du premier angle α réalisé entre un plan de référence et la direction YY. Le premier angle α est avantageusement mesuré dans un plan perpendiculaire à la direction XX. Ce dispositif de mesure 6 permet au joueur de connaître l'inclinaison qui existe entre la direction YY et le plan de référence. Lors de la recherche de la posture optimale, la direction YY représente la direction du club de golf, c'est-à-dire la direction qui relie les mains du golfeur à la tête du club de golf. Le dispositif de mesure est donc représentatif de l'angle qui existe entre le club de golf et le plan de référence, de manière avantageuse le sol. La connaissance exacte de l'angle n'étant pas une donnée particulièrement intéressante pour la majorité des joueurs, le dispositif de mesure peut indiquer une ou plusieurs plages angulaires représentatives de domaines intéressants et de domaines déconseillés pour des catégories de clubs de golf. Le dispositif de mesure est alors un dispositif de comparaison 6 de l'angle réalisé entre un plan de référence et le troisième indicateur 4 par rapport à une gamme recommandée. Les deux modes de réalisation peuvent être combinés. De manière avantageuse, le dispositif de comparaison 6 comporte un repère coloré indiquant un secteur angulaire représentatif de la gamme recommandée 6b.

Dans un mode de réalisation particulier, le dispositif de mesure 6 comporte un premier secteur angulaire 6a représentatif d'une zone déconseillée puis un deuxième secteur angulaire 6b représentatif d'une zone recommandée puis un troisième secteur angulaire 6a représentatif d'une nouvelle zone déconseillée. Dans ce cas de figure, si le « lie » du club de golf est dans une zone déconseillée 6a, cela veut dire que l'angle est trop faible ou trop important et donc que la position du joueur n'est pas optimale. Il est alors intéressant que le joueur se rapproche ou s'éloigne de la platine 1 afin d'avoir un angle α dans la gamme recommandée 6b. Comme le dispositif est déjà orienté en direction de la cible, le joueur peut rapidement tester plusieurs positions afin de trouver une ou plusieurs postures considérées comme optimales. Le dispositif de mesure 6 peut faire partie de la platine ou il peut être démontable.

Les trois secteurs angulaires peuvent être dessinés sur le dispositif 6 ce qui permet au joueur de savoir rapidement, d'un simple coup d'oeil, si la position adaptée est correcte. Il est également possible d'utiliser un dispositif sonore ou visuel qui indique si le premier angle α est dans la zone recommandée ou dans une zone déconseillée. Le dispositif peut alors comporter au moins deux diodes lumineuses chacune étant préférentiellement associée à la zone recommandée ou aux zones déconseillées ou un générateur d'au moins un ou deux bruits configuré comme précédemment.

Dans un mode de réalisation préférentiel non représenté, le dispositif de mesure 6 comporte deux zones de tolérance. Chaque zone de tolérance sépare la zone recommandée 6b d'une des zones déconseillées 6a.

Dans un mode de réalisation encore plus préférentiel (non représenté), le dispositif de mesure 6 comporte deux échelles angulaires différentes. Chaque échelle angulaire définit par exemple trois secteurs angulaires comme cela a été indiqué précédemment. Une échelle angulaire est associée à un premier type de clubs de golf, par exemple, les drivers et les bois. Une seconde échelle est associée à un second type de clubs de golf, par exemple les fers. Ces deux échelles peuvent avoir une zone de recouvrement qui traduit que le premier angle α peut être utilisé pour une grande variété de clubs de golf.

Le troisième indicateur 4 intervient dans l'optimisation de la posture du golfeur, mais il peut également être utilisé dans l'optimisation de la gestuelle du golfeur, c'est-à-dire dans le mouvement réalisé lors de la frappe de la balle. Le troisième indicateur 4 permet de définir un plan de swing à l'intérieur duquel le club de golf devrait se déplacer lors de la frappe de la balle.

Dans un mode de réalisation pouvant être combiné avec les modes de réalisation précédents, le dispositif comporte un cinquième indicateur 7 qui est configuré de manière à définir une quatrième direction OO et un second plan de swing. Le cinquième indicateur 7 définit une quatrième direction OO qui est perpendiculaire à la première direction XX. La quatrième direction OO définit un deuxième angle β par rapport au plan défini par le sol ou au plan de référence utilisé pour définir le premier angle α.

Dans un mode de réalisation particulier, le cinquième indicateur 7 est monté à rotation par rapport à la première direction XX. Le cinquième indicateur 7 peut être réalisé de la même manière que le troisième indicateur 4. Le troisième indicateur 4 est avantageusement indépendant du cinquième indicateur 7 ce qui permet à l'utilisateur de définir des directions YY et OO différentes. Ces deux directions distinctes sont avantageusement utilisées pour définir des plans de swing différents dans la gestuelle du golfeur. De manière avantageuse, le cinquième indicateur 7 est destiné à représenter un plan de swing contenant l'axe longitudinal du club de golf tenu par le golfeur en fin de d'action de frappe.

Les deux indicateurs 4 et 7 peuvent également servir au perfectionnement de la posture de deux golfeurs se faisant face. Dans cette configuration, une seule platine peut servir à améliorer la posture du plusieurs golfeurs ce qui permet de faciliter le travail de formation et de réduire les coûts.

Le cinquième indicateur 7 est représentatif d'un deuxième plan de swing qui contient la quatrième direction OO et la première direction XX. Le deuxième plan de swing du golfeur est donc défini par la première direction XX et la quatrième direction OO.

De manière avantageuse, le cinquième indicateur 7 est solidaire de la platine 1 afin de faciliter le positionnement du deuxième plan de swing par rapport au golfeur.

Le premier plan de swing et le deuxième plan de swing coupent le plan défini par le sol, le long de la première direction XX.

Les quatrième et cinquième indicateurs 5 et 7 peuvent être formés par tout moyen adapté, par exemple par les mêmes moyens et dispositifs que ceux déjà proposés pour le troisième indicateur 4. Les différents indicateurs peuvent être réalisés dans des technologies différentes ou alors avec les mêmes techniques. Les troisième et cinquième indicateurs 4 et 7 définissent deux plans de swing, avantageusement distincts qui peuvent être utilisés pour définir un secteur angulaire à l'intérieur duquel le club de golf et plus particulièrement la tête du club de golf doit se déplacer avant de frapper la balle.

Dans un mode de réalisation avantageux pouvant être combiné avec les modes de réalisation précédents, le dispositif de perfectionnement comporte un dispositif de mesure 8 de la valeur du premier angle α par rapport à la valeur du deuxième angle β ou un dispositif de mesure de l'angle formé entre le troisième indicateur 4 et le cinquième indicateur 7. La valeur du premier angle α est calculée de la même manière que la valeur du deuxième angle β en prenant le même plan de référence et en mesurant les deux angles dans le même sens. A titre d'exemples, les deux angles sont représentés sur la figure 2 en prenant le sol comme plan de référence.

Dans un mode de réalisation particulier, le dispositif de mesure 8 est configuré de manière à ce qu'il indique si la valeur du deuxième angle β est dans une gamme compatible avec la valeur du premier angle α ou si la différence angulaire entre les deux indicateurs 4 et 7 est dans une gamme autorisée. Le dispositif de mesure 8 est alors un dispositif de comparaison de l'écart angulaire entre le troisième indicateur 4 et le cinquième indicateur 7 par rapport à une gamme recommandée.

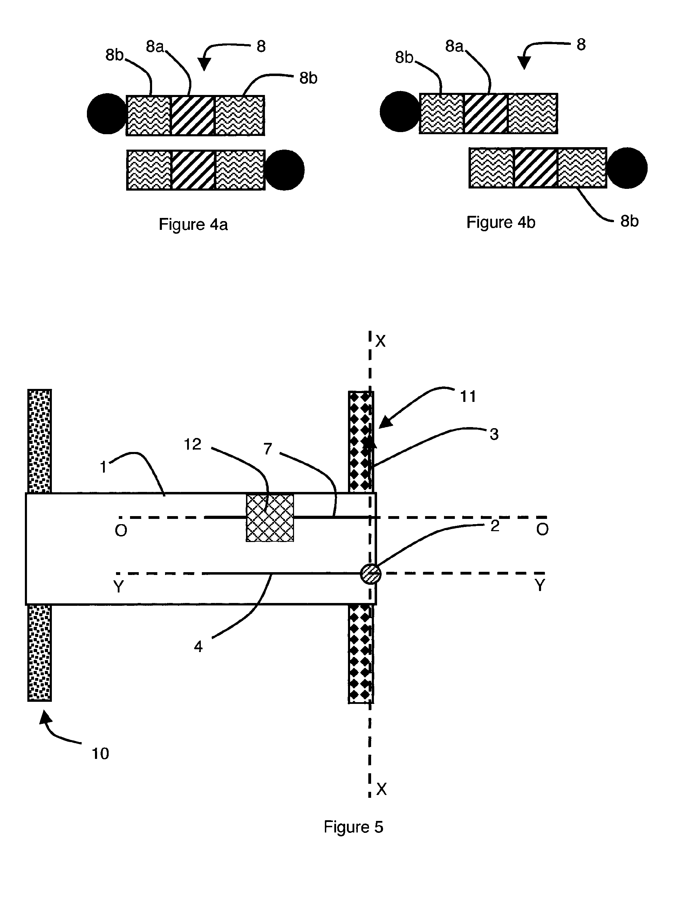

Lorsque les indicateurs 4 et 7 sont montés à rotation sur la platine 1 autour du même axe de rotation, avantageusement l'axe XX, il est avantageux d'associer un repère de couleur à chacun des indicateurs. Dans un mode de réalisation préférentiel illustré aux figures 4a et 4b, les deux repères comportent chacun une zone recommandée 8a séparant deux zones déconseillées 8b. De manière encore plus avantageuse, ils sont agencés de sorte à ce faire face et que le recouvrement des deux zones conseillées 8a ait lieu durant toute la période où l'écart angulaire entre les deux indicateurs est dans la gamme autorisée.

Dans l'exemple illustré à la figure 4a, le recouvrement complet entre les deux zones recommandées 8a peut représenter le début de la gamme angulaire autorisée ou alors le milieu de la gamme angulaire autorisée. La figure 4b illustre une absence de recouvrement entre les deux zones 8a ce qui indique que l'écart angulaire entre les deux indicateurs 4 et 7 est trop important.

Les deux repères peuvent être identiques, par exemple avec un indicateur de couleur qui présente la zone recommandée dans une première couleur et les zones déconseillées dans une seconde couleur. Dans cette configuration, l'écart angulaire entre les deux indicateurs 4 et 7 est adapté lorsque les deux zones dans la première couleur se font face. Il est également possible d'avoir des jeux de couleurs différents.

Il est encore possible d'avoir un repère gradué ou de couleur associé à un des indicateurs et une tige associée à l'autre indicateur de sorte qu'au fur et à mesure du déplacement d'un des indicateurs par rapport à l'autre, le joueur puisse observer un déplacement de la tige sur le repère. De cette manière le joueur sait immédiatement si l'écart angulaire entre les deux indicateurs est adapté ou non.

Il est encore possible d'avoir un indicateur lumineux, par exemple avec des diodes afin d'indiquer la valeur de l'angle ou si l'angle est dans une gamme recommandée ou déconseillée. Il est encore possible de réaliser la même fonction au moyen d'un indicateur sonore.

La valeur du premier angle α est représentative d'un premier plan de swing et la valeur du deuxième angle β est représentative d'un deuxième plan de swing.

Ces deux plans de swing peuvent intervenir dans le contrôle de la gestuelle du golfeur dans différentes conditions. Les premier et deuxième plans de swing peuvent définir un secteur angulaire, une zone de l'espace à l'intérieur de laquelle le golfeur doit réaliser son swing (matérialisé par le déplacement de la tête du club de golf) afin de profiter d'un maximum d'efficacité. Il y a alors définition d'un plan de swing inférieur et d'un plan de swing supérieur à l'intérieur duquel doit se trouver le plan de swing du golfeur.

Les deux plans de swing peuvent également définir l'angle de départ et l'angle d'arrivée du geste du golfeur. L'utilisation de deux plans de swing différents permet d'imprimer un effet particulier à la balle de golf.

En fonction de l'utilisation recherchée, lorsqu'un des deux angles est défini, le dispositif de comparaison 8 peut indiquer plusieurs gammes disponibles pour l'angle restant. De manière préférentielle, un indicateur visuel ou sonore est configuré de manière à indiquer à l'utilisateur que l'écart entre les deux indicateurs 4 et 7 est compris entre 9° et 15° afin de tenir compte de la morphologie du joueur et de préférence entre 10° et 14° afin d'avoir un rendement maximal du swing.

Le dispositif peut encore comporter un indicateur du sens du vent, par exemple au moyen d'un fil. Le fil peut être accroché sur l'indicateur 4 ou 7 ou il peut être accroché sur un support spécifique associé à la platine 1.

Le dispositif peut également comporter un dispositif de réglage 9 de l'écartement entre la platine 1 et le joueur. Le dispositif de réglage 9 est configuré de manière à définir plusieurs directions parallèles à la ligne d'objectif XX. Les différentes directions sont espacées de la ligne d'objectif XX définie par l'indicateur 3. Ce dispositif de réglage 9 permet à l'utilisateur de positionner ses pieds et donc son buste dans une position compatible avec la première direction XX. De manière préférentielle, le dispositif de réglage 9 comporte un guide orienté parallèlement à l'axe XX et pouvant se déplacer sur le sol perpendiculairement à l'axe XX. Le guide orienté parallèlement à l'axe XX est appelé ligne des pieds.

Le dispositif de réglage 9 peut également comporter un gabarit destiné à être posé sur le sol et indiquer le décalage qui existe entre la position de la balle et la position du joueur (matérialisée par exemple par la colonne vertébrale du joueur). Ce décalage est réalisé le long de la ligne des pieds. Le gabarit permet au joueur de se placer différemment selon qu'il utilise un club long ou un club court de manière à avoir le maximum de rendement lors de la frappe de la balle. Ce gabarit permet au joueur de déplacer la zone de frappe de la balle par rapport à la course de la tête du club de golf. Ce décalage permet d'imprimer des effets différents à la balle selon que la frappe a lieu dans la phase descendante du club de golf, ou dans la phase ascendante ou dans la zone la plus basse de la course du club de golf.

De manière avantageuse, les pointes ou les talons de l'utilisateur sont agencés de manière à former une ligne qui est parallèle avec le dispositif de réglage 9 et donc avec le premier indicateur, c'est la ligne des pieds. Le dispositif de réglage 9 étant décalé de l'axe XX défini par le dispositif, il est plus facile pour l'utilisateur de se positionner parfaitement dans le sens de la ligne d'objectif de jeu.

La direction définie par le dispositif de réglage 9 peut être matérialisée par une bande de papier, de tissue ou de matériau polymère qui court sur le sol et forme le guide. Cette direction peut également être définie par un élément rigide posé sur le sol.

Le dispositif de perfectionnement de la posture et/ou de la gestuelle du golfeur peut être réalisé en un ou plusieurs matériaux. Le dispositif de perfectionnement peut être installé fixement au sol, par exemple, sur une zone d'entraînement. Le dispositif peut également être configuré de manière à être mobile et être emmené avec le golfeur sur un parcours de golf avec le reste de son matériel.

Dans un mode de réalisation particulier illustré à la figure 5, le dispositif peut être réalisé de la manière suivante.

La platine 1 comporte une première face principale destinée à être en contact avec le sol. La platine comporte une deuxième face principale opposée à la première face principale. La deuxième face principale est munie de l'indicateur 2 de position de la balle et avantageusement de l'indicateur 3 d'orientation de la ligne d'objectif. De manière également avantageuse, la deuxième face principale est également munie des indicateurs 4 et 7.

Des faces latérales relient les deux faces principales. Dans un mode de réalisation préférentiel, une ou plusieurs rainures sont formées dans les faces latérales. Dans le mode de réalisation illustré à la figure 5, une rainure est formée dans chacune des faces latérales de manière à loger un ou plusieurs bras de stabilisation ou des indicateurs.

Dans le mode de réalisation illustré, deux bras sont logés dans chaque rainure. Une première paire de bras 10 est formée par un élément de chaque rainure. Cette première paire de bras 10 forme des éléments de stabilisation latérale. La première paire de bras 10 est en contact avec le sol et elle favorise la stabilité de la platine 1 définissant un point d'appui supplémentaire décalé de l'axe principale de la platine 1

Dans un mode de réalisation avantageux, l'élément de stabilisation est monté à rotation de manière à être disposé partiellement ou complètement dans la rainure de la platine 1 dans une première position de rangement. Dans une position d'utilisation, l'élément de stabilisation s'écarte de l'axe principal de la platine 1 pour former une zone de maintien additionnelle.

Dans ce mode de réalisation « en rotation », il est avantageux de disposer des butées de fin de course de la rotation de l'élément de stabilisation. Les butées sont configurées de manière à ce que l'élément de stabilisation puisse servir d'indicateur 3 de la première direction XX ou d'une direction parallèle à la première direction XX. La direction XX ou une direction parallèle à cette dernière peut être indiquée, par exemple au moyen d'un indicateur de couleur formé sur les éléments de stabilisation ou au moyen de la forme des éléments de stabilisation qui sont par exemple allongés, leur axe d'élongation définissant la direction recherchée. D'autres moyens sont également envisageables pour définir cette direction.

L'élément de stabilisation peut également être formé par une barre ou plusieurs barres qui s'enfoncent dans la platine 1. De manière avantageuse, la barre coopère avec le trou formé dans la platine 1 afin de pourvoir servir d'indicateur.

De manière avantageuse, une deuxième paire de bras 11 est également logée dans les rainures. La deuxième paire de bras 11 sert à indiquer la ligne d'objectif. Pour obtenir ce résultat, les rainures et les bras sont configurés pour présenter une butée de fin de course de manière qu'au moins un des bras définisse la direction de la ligne d'objectif. La deuxième paire de bras 11 peut être en contact avec le sol ou alors décalée de la surface du sol.

Cet agencement particulier permet d'avoir un dispositif compact lorsqu'il n'est pas utilisé et un dispositif stable et pratique pendant son utilisation.

La figure 2 illustre en vue de coté selon la direction XX, un bras 10 et un bras 11 en position de repos. Les deux bras sont rangés à l'intérieur de la rainure formée dans une face latérale de la platine 1.

Dans un mode de réalisation particulier qui peut être combiné avec les modes de réalisation précédents, le dispositif comporte des moyens de blocage de l'inclinaison du troisième indicateur 4 et avantageusement du cinquième indicateur 7. Les moyens de blocage sont configurés de manière à ce que l'indicateur reste dans sa position une fois que l'utilisateur a placé l'indicateur 4 et avantageusement l'indicateur 7 dans la configuration recherchée.

Dans une variante de réalisation un sixième indicateur 12 est configuré pour définir un plan parallèle à la direction XX et coulissant le long de la quatrième direction OO. Avantageusement, le sixième indicateur 12 coulisse sur le cinquième indicateur 7. Le sixième indicateur 12 permet de placer les mains du joueur et donc la face du club de golf dans une position dite haute qui est favorable au joueur. Cette configuration permet de réaliser un positionnement rapide du club de golf dans l'espace de tolérance pour un bon swing car les mains du joueur sont bloquées par le sixième indicateur 12 et cela évite de dépasser le plan de swing maximal.

Avantageusement, le sixième indicateur 12 est formé par une plaquette montée coulissante sur le cinquième indicateur 7. Le sixième indicateur 12 est avantageusement configuré pour être toujours parallèle à la direction XX ou pour tourner autour le cinquième indicateur 7 avec un repère indiquant l'axe XX pour faciliter la mise parallèle de ces deux indicateurs.

Dans une variante de réalisation, un ou plusieurs indicateurs du dispositif peuvent être remplacés par des capteurs placés sur le joueur, sur le club de golf et/ou sur la platine et par un calculateur.

Dans un premier mode de réalisation, le quatrième indicateur 5 est formé par un ou plusieurs capteurs disposés sur le joueur, par exemple un ou plusieurs capteurs disposés dans le dos du joueur. De cette manière, le calculateur reçoit l'information émise par le ou les capteurs et il indique si l'inclinaison du buste ou du dos du joueur est optimale ou non.

Dans le but d'améliorer sa posture et/ou sa gestuelle, le joueur de golf peut utiliser le dispositif de la manière suivante.

Le dispositif est placé sur le sol. Le dispositif peut être placé par le joueur ou par un tiers tout au long de son parcours. Le dispositif peut également être installé fixe sur le sol, par exemple sur une zone d'entraînement. Une fois la platine 1 est placée sur le sol, elle est orientée vers la cible tout comme le reste du dispositif. La cible correspond à la zone où le joueur désire envoyer la balle. L'orientation du dispositif est effectuée au moyen du deuxième indicateur 3 présent sur la platine 1. L'axe défini par le deuxième indicateur 3 est dirigé vers la zone cible. De cette manière, la première direction XX, définie par la platine 1, est confondue avec la ligne d'objectif.

Dans un autre mode de réalisation, le joueur peut introduire un angle prédéfini entre l'orientation définie par la platine 1 et la ligne d'objectif reliant la platine à la cible, par exemple pour tenir compte de la force du vent. Cependant, cet angle reste faible et est négligé.

Le joueur se place par rapport à la platine 1 au moyen du premier indicateur 2 de manière à ce que dans la posture de frappe de balle, la tête du club de golf soit au niveau du premier indicateur 2 matérialisant la balle de golf. Le premier indicateur 2 peut être matérialisé par le dessin d'une balle, par une balle ou par tout autre repère présent sur la platine 1. Dans un mode de réalisation particulier, le premier indicateur 2 peut être formé par la rotule ou l'axe de rotation qui relie la platine au troisième indicateur 4 ce qui facilite la réalisation du dispositif et le positionnement du joueur dans la posture optimale.

Le joueur est sensiblement orienté selon la première direction XX, c'est-à-dire que l'axe passant par les deux épaules du joueur est parallèle à la direction XX lorsque ce dernier frappe la balle. Cet alignement du joueur peut également être matérialisé par un axe qui passe par les deux talons du joueurs ou par les deux pointes avants des pieds du joueur. De manière avantageuse, le joueur se place par rapport à un guide du dispositif de réglage 9 qui est placé sur le sol.

Une fois le joueur placé par rapport à la première direction XX, il se place par rapport à la platine 1 en s'avançant ou en s'éloignant de manière à ce que la tête du club de golf entre en contact ou se confonde avec le premier indicateur 2. Ces deux étapes peuvent être interverties.

Ensuite, le troisième indicateur 4 est aligné avec la direction formée par l'axe longitudinale du club de golf de manière à ce que l'axe YY défini par le troisième indicateur 4 passe par le premier indicateur 2 et par les mains du joueur. L'axe défini par le troisième indicateur 4 suit l'axe longitudinal du club de golf depuis sa tête jusqu'à son extrémité opposée. Cet axe est perpendiculaire à la première direction XX. Le troisième indicateur est dans une première position caractéristique qui peut être utilisée par la suite pour le perfectionnement de la gestuelle.

De manière avantageuse, le joueur vérifie que l'angle défini par le club de golf est dans une gamme recommandée au moyen du dispositif de mesure 6. Il peut comparer l'angle qui est formé entre le troisième indicateur 4 et un plan de référence par rapport à une gamme recommandée (6b). Il lui est alors possible de modifier sa posture de manière à ce que l'angle entre le troisième indicateur 4 et le plan de référence soit dans la gamme recommandée. Le joueur se trouve alors dans une posture améliorée en comparaison de sa posture initiale.

Le quatrième indicateur 5 est ensuite placé avantageusement par rapport au dos du joueur, par exemple par rapport à la colonne vertébrale du joueur. Le quatrième indicateur 5 permet de définir la troisième orientation ZZ qui est représentative de la colonne vertébrale du joueur pour obtenir une frappe de balle optimale. Cette position particulière assure une bonne adéquation entre la rotation du bassin et la rotation des épaules lors de la frappe de la balle.

De manière avantageuse, le quatrième indicateur 5 est disposé à 98° par rapport à l'axe matérialisé par le troisième indicateur 4. Le quatrième indicateur 5 permet également de définir une gamme s'écartant légèrement de cet angle optimal, par exemple en s'écartant de plus ou moins 5° de l'angle de 98°.

Dans un premier cas de figure, le joueur se positionne et il confronte sa position avec celle indiquée par le dispositif de perfectionnement. Dans un autre cas de figure, le quatrième indicateur 5 est placé et le joueur se positionne de manière à être dans la position optimale.

En fonction des indications données par le troisième indicateur 4 et/ou par le quatrième indicateur 5, le joueur peut modifier sa position par rapport à la platine 1, par exemple en se rapprochant ou en s'éloignant de la platine 1 dans une direction perpendiculaire à la première direction XX, le joueur restant sur le sol. Le joueur peut également se rapprocher ou s'éloigner de la cible selon la première direction XX. De manière préférentielle, le joueur se décale selon la direction XX par rapport à l'indicateur de position de balle 2 afin de tenir compte du type de club de golf utilisé. Ce décalage peut être matérialisé sur le guide du dispositif de réglage 9.

De manière simple, le joueur peut orienter le dispositif dans le sens du jeu et se placer rapidement par rapport au dispositif. Les deux indicateurs 4 et 5 permettent facilement au joueur de trouver la posture optimale pour envoyer la balle en direction de la cible.

Dans un mode de réalisation particulier, le dispositif comporte un moyen de mesure de l'angle α qui existe entre le troisième indicateur 4 et le sol ou un autre plan de référence. L'indication de l'angle α permet à l'utilisateur de connaître rapidement l'inclinaison de son club de golf lorsqu'il est dans la phase de recherche de la posture optimale.

Une fois le joueur placé par rapport à la platine 1 et lorsque le troisième indicateur 4 est aligné avec le club de golf, le joueur est en mesure de savoir si l'angle de son club de golf, également appelé « lie », est dans une gamme recommandée. Après cette étape de comparaison, le joueur peut se déplacer selon un axe perpendiculaire à la première direction XX de manière à augmenter ou à réduire la valeur de cet angle. Le joueur peut également, moduler l'inclinaison de son buste par rapport à ses jambes pour modifier cet angle et ainsi se placer dans la gamme recommandée.

Un placement par itération peut être réalisé de manière à ce que le « lie » du club de golf se trouve dans une gamme recommandée tout comme l'angle de la colonne vertébrale du joueur. L'inclinaison de la colonne vertébrale ou du buste du joueur est modélisée par le quatrième indicateur 5. De ce fait, à chaque fois que le joueur modifie l'inclinaison de son club de golf, il modifie également l'angle que doit former sa colonne vertébrale avec le plan du sol.

Cette phase de recherche d'une bonne posture peut être représentée schématiquement par :
- comparer l'angle formé entre le troisième indicateur 4 et un plan de référence par rapport à une gamme recommandée 6b, et
- modifier la posture du joueur de manière à ce que l'angle entre le troisième indicateur 4 et le plan de référence soit dans la gamme recommandée, le joueur étant dans une posture améliorée.

Dans un mode de mise en oeuvre avantageux, une fois que le joueur de golf se trouve dans une posture recommandée, il utilise le dispositif afin d'améliorer également sa gestuelle.

Afin d'améliorer sa gestuelle, le joueur peut déplacer le troisième indicateur 4 ou le cinquième indicateur 7 afin de définir un plan de swing optimal. Ce plan de swing optimal contient l'axe défini par l'indicateur 4 ou 7 utilisé et il passe par le sternum du joueur dans sa posture amélioré ce qui permet de définir une deuxième position caractéristique. Le plan de swing optimal peut être défini par l'axe matérialisé par l'indicateur 4 ou 7 et par la première direction XX. Le troisième indicateur 4 se trouve dans une première position.

De cette manière, une fois que le joueur a déterminé sa posture optimale, il lui suffit de déplacer le troisième indicateur 4 ou le cinquième indicateur 7 du dispositif à hauteur de son sternum de manière à définir rapidement et simplement le plan de swing optimal. Le joueur est en mesure de savoir rapidement si le mouvement du club de golf lors de la frappe de la balle est optimal. Il suffit pour cela d'arrêter son mouvement et de comparer l'inclinaison de son club par rapport à l'indicateur utilisé. Dans ce mode de mise en oeuvre, il est avantageux de placer l'indicateur à distance du joueur de manière à ne pas gêner le déplacement du club de golf.

Dans ce mode de mise en oeuvre, il est également avantageux de prévoir un dispositif comportant deux indicateurs capables de définir le plan de swing de chaque côté du joueur de manière à ce que ce dernier soit toujours en mesure de confronter son ressenti avec une donnée objective lors de la descente du club de golf ou lors de la remontée du club car ces deux étapes interviennent dans la trajectoire finale de la balle.

Selon les modes de réalisation, le dispositif peut comporter deux indicateurs disposés sur une même platine 1 ou alors deux platines 1 comportant chacune au moins un troisième indicateur 4. Dans un mode de réalisation particulier, le dispositif de perfectionnement comporte deux patines. La platine additionnelle peut être munie du cinquième indicateur 7 et/ou d'un indicateur supplémentaire. Il est alors avantageux de placer la platine 1 et la platine additionnelle de chaque côté du joueur, lors de la frappe, de manière à ce que ce dernier puisse confronter sa position lors de la phase descendante et ascendante du club de golf avec un indicateur placé juste à coté du joueur du bon côté. Cette configuration permet un meilleur placement du joueur dans toute la phase de frappe. Dans une mode de réalisation particulier, les deux platines sont identiques et peuvent être interverties.

Dans un mode de mise en oeuvre préférentiel, le joueur défini le secteur angulaire de swing au moyen du troisième indicateur 4 et du cinquième indicateur 7. Le troisième indicateur est dans la première position définie lors de la phase de recherche de la posture optimale. Le cinquième indicateur 7 est placé de manière à faire passer la quatrième direction OO par une des épaules du joueur et définir un plan de swing additionnel. Le troisième indicateur 4 et le cinquième indicateur 7 définissent un secteur angulaire de swing à l'intérieur duquel le club de golf se déplace. Dans ce cas de figure, le troisième indicateur 4 définit un plan de swing inférieur et le cinquième indicateur 7 définit un plan de swing supérieur.

De manière avantageuse le secteur angulaire est défini dans une gamme recommandée au moyen du dispositif de mesure 8. Le secteur angulaire recommandé est défini de préférence entre le troisième indicateur 4 et le cinquième indicateur 7. Le troisième indicateur 4 a été avantageusement placé dans la première position lors de la recherche de la posture optimale, à ce moment le troisième indicateur définit un plan de swing inférieur qui contient la direction XX. Le cinquième indicateur 7 peut être placé de manière à faire passer la quatrième direction OO par une des épaules du joueur et définir un plan de swing additionnel, ici un plan de swing supérieur. Le troisième indicateur 4 et le cinquième indicateur 7 définissent un secteur angulaire optimal de swing. L'angle existant entre les deux indicateurs 4 et 7 est ensuite comparé à une gamme recommandée au moyen du dispositif de mesure 8. Le cinquième indicateur 7 peut également être placé au moyen du dispositif de mesure 8 afin de définir un secteur angulaire recherché.

De cette manière, l'utilisateur est en mesure de contrôler sa position en vérifiant que son plan de swing réel est selon le plan défini par le troisième indicateur 4. Ce contrôle est objectif et permet à l'utilisateur de confronter son ressenti avec le plan de swing défini par le dispositif.

De manière avantageuse, l'utilisateur est orienté dans un plan parallèle à la première direction XX de manière à ce que la tête du club de golf soit en mesure de se déplacer dans le plan défini par le troisième indicateur 4 et/ou par le cinquième indicateur 7. De manière encore plus avantageuse, les pointes avants et/ou arrières des pieds de l'utilisateur définissent une direction qui est parallèle à la première direction XX.

## Revendications

1. Dispositif portatif de perfectionnement de la posture et/ou de la gestuelle du golfeur comportant une platine (1) destinée à reposer sur le sol, la platine (1) comportant :
- un premier indicateur (2) représentatif de la position d'une balle de golf,
- un deuxième indicateur (3) agencé de manière à indiquer une première direction (XX) souhaitée de déplacement de la balle de golf,
- un troisième indicateur (4) configuré de manière à définir une deuxième direction (YY) sensiblement perpendiculaire à la première direction (XX), le troisième indicateur (4) étant configuré pour définir un plan de swing à l'intérieur duquel le club de golf devrait se déplacer lors de la frappe de la balle de golf,
- le dispositif comprenant en outre un quatrième indicateur (5) configuré de manière à définir une troisième direction (ZZ) sensiblement perpendiculaire à la deuxième direction (YY) et perpendiculaire à la première direction (XX), le quatrième indicateur (5) étant configuré pour s'aligner avec l'axe de la colonne vertébrale du golfeur.

2. Dispositif selon la revendication 1, **caractérisé en ce qu'il** comporte un dispositif de comparaison (6) de l'angle réalisé entre un plan de référence et le troisième indicateur (4) par rapport à une gamme recommandée (6b).

3. Dispositif selon la revendication 2, **caractérisé en ce que** le dispositif de comparaison (6) comporte un repère coloré indiquant un secteur angulaire représentatif de la gamme recommandée (6b).

4. Dispositif selon l'une quelconque des revendications 1 à 3, **caractérisé en ce qu'il** comporte un cinquième indicateur (7) configuré de manière à définir une quatrième direction (OO) perpendiculaire à la première direction (XX), la quatrième direction (OO) définissant un deuxième angle par rapport au plan défini par le sol, le cinquième indicateur (7) étant destiné à représenter un plan de swing contenant l'axe longitudinal du club de golf tenu par le golfeur en fin de d'action de frappe.

5. Dispositif selon la revendication 4, **caractérisé en ce qu'il** comporte un dispositif de comparaison (8) de l'écart angulaire existant entre le troisième indicateur (4) et le cinquième indicateur (7) par rapport à une gamme recommandée (8a).

6. Dispositif selon l'une des revendications 4 et 5, **caractérisé en ce qu'il** comporte une platine additionnelle munie du cinquième indicateur (7).

7. Dispositif selon l'une des revendications 4 à 6, **caractérisé en ce qu'il** comporte un sixième indicateur (12) configuré de manière à définir un plan parallèle à la direction (XX) et coulissant sur le cinquième indicateur (7) le long de la quatrième direction (OO).

8. Procédé de perfectionnement de la gestuelle du golfeur **caractérisé en ce qu'il** comporte les étapes suivantes :
- placer un dispositif selon les revendications 1 à 6 sur le sol,
- orienter la première direction (XX) définie au moyen du deuxième indicateur (3) de la platine (1) en direction de la zone cible,
- placer le joueur par rapport à la platine (1) au moyen du premier indicateur (2) de sorte que la tête d'un club de golf soit au niveau du premier indicateur (2) lorsque le joueur est en position de frappe,
- aligner le troisième indicateur (4) avec la direction formée par l'axe longitudinal du club de golf, le troisième indicateur (4) définissant une deuxième direction (YY) passant par les mains du golfeur et le premier indicateur (2) dans une première position du troisième indicateur (4),
- placer le quatrième indicateur (5) de manière à définir une troisième direction (ZZ) représentative de la direction de la colonne vertébrale du joueur.

9. Procédé de perfectionnement selon la revendication 8 **caractérisé en ce qu'il** comporte successivement:
- comparer l'angle formé entre le troisième indicateur (4) et un plan de référence par rapport à une gamme recommandée (6b),
- modifier la posture du joueur de manière à ce que l'angle entre le troisième indicateur (4) et le plan de référence soit dans la gamme recommandée, le joueur étant dans une posture améliorée.

10. Procédé de perfectionnement selon la revendication 9, **caractérisé en ce qu'il** comporte :
- déplacer le troisième indicateur (4) ou le cinquième indicateur (7), dans une deuxième position, de manière à définir un plan de swing optimal comprenant la première direction (XX) et la direction (YY, OO) définie par l'indicateur déplacé, le plan de swing optimal étant agencé pour passer par le sternum du joueur dans la posture améliorée.

11. Procédé de perfectionnement selon la revendication 10, **caractérisé en ce qu'il** comporte :
- placer le cinquième indicateur (7) de manière à faire passer la quatrième direction (OO) par une des épaules du joueur et définir un plan de swing additionnel, le troisième indicateur (4) et le cinquième indicateur (7) définissant un secteur angulaire de swing.

12. Procédé de perfectionnement selon la revendication 11, **caractérisé en ce qu'il** comporte :
- comparer l'écart angulaire entre le troisième indicateur (4) et le cinquième indicateur (7) par rapport à une gamme recommandée (8a) pour définir un secteur angulaire optimal du swing.
